# EUROPEAN PATENT SPECIFICATION

(11) **EP 3 544 340 B1**
(45) Date of publication and mention of the grant of the patent: **26.07.2023**
(21) Application number: 17872746.7
(22) Date of filing: 05.09.2017
(51) Int. Cl.: H04W 64/00, H04W 56/00, G01S 5/02, G01S 5/14

(54) **LMU DEVICE FUSION METHOD, APPARATUS, AND SYSTEM**
VERFAHREN, VORRICHTUNG UND SYSTEM ZUR FUSION VON LMU-VORRICHTUNGEN
PROCÉDÉ, APPAREIL ET SYSTÈME DE FUSION DE DISPOSITIFS DE LMU

(30) Priority: 17.11.2016 CN 201611014884
(43) Date of publication of application: 25.09.2019
(73) Proprietor: ZTE Corporation, Shenzhen, Guangdong 518057 (CN)
(72) Inventor: CHEN, Shijun, Shenzhen, Guangdong 518057 (CN); CHEN, Dawei, Shenzhen, Guangdong 518057 (CN); WANG, Yuanyuan, Shenzhen, Guangdong 518057 (CN); CHEN, Qiang, Shenzhen, Guangdong 518057 (CN); TIAN, Xuefeng, Shenzhen, Guangdong 518057 (CN)
(74) Representative: Aipex B.V.
(86) International application number: PCT/CN2017/100576
(87) International publication number: WO 2018/090697

(56) References cited:
- WO-A1-2011/016804
- WO-A1-2016/032265
- CN-A- 102 573 060
- CN-A- 103 024 757
- CN-A- 105 848 281
- US-A1- 2012 020 320
- Qualcomm Incorporated: "Introduction of Transmission Points for OTDOA in Shared Cell-ID Scenario and PRS-based Terrestrial Beacon Systems", GPP TSG-RAN WG2 Meeting#95 bis, no. R2-167272, 14 October 2016 (2016-10-14), XP051162543,

## Description

### TECHNICAL FIELD

The present application relates to, but is not limited to, the field of locating technology in wireless communications and, in particular, to a location measurement unit (LMU) method, apparatus and system.

### BACKGROUND

With the development of the times, positioning technology has attached more and more attention. The demand of high-precision positioning has made the indoor and other scenarios impose higher technical requirements for wireless positioning.

For Global Positioning System (GPS) positioning technology, the signal weakens indoors due to signal loss and other reasons, which makes it impossible for a positioning terminal to search for enough satellites. A cellular network system cannot achieve sufficient accuracy indoors or outdoors due to large positioning error and thus cannot meet wireless positioning requirements. The communication network has good coverage, but because the communication network mainly serves the communication demand, there are few researches on the positioning requirements. Therefore, the positioning error of the communication network ranges from one hundred meters to several kilometers, which cannot meet positioning requirements indoors and outdoors. Therefore, the communication network is marginalized in the field of positioning.

Currently, the 3rd Generation Partnership Project (3GPP) has set up a project for high-precision positioning based on Long Term Evolution (LTE). The LTE positioning includes positioning based on an uplink signal and positioning based on a downlink signal. Since the positioning based on uplink sounding reference signal (SRS) has an advantage of being compatible with the currently used 4G intelligent machines, it has become the focus of high-precision positioning research based on the wireless communication network at the present stage. In the future 5G era, the positioning based on the uplink SRS may still be applied in an indoor dense networking environment.

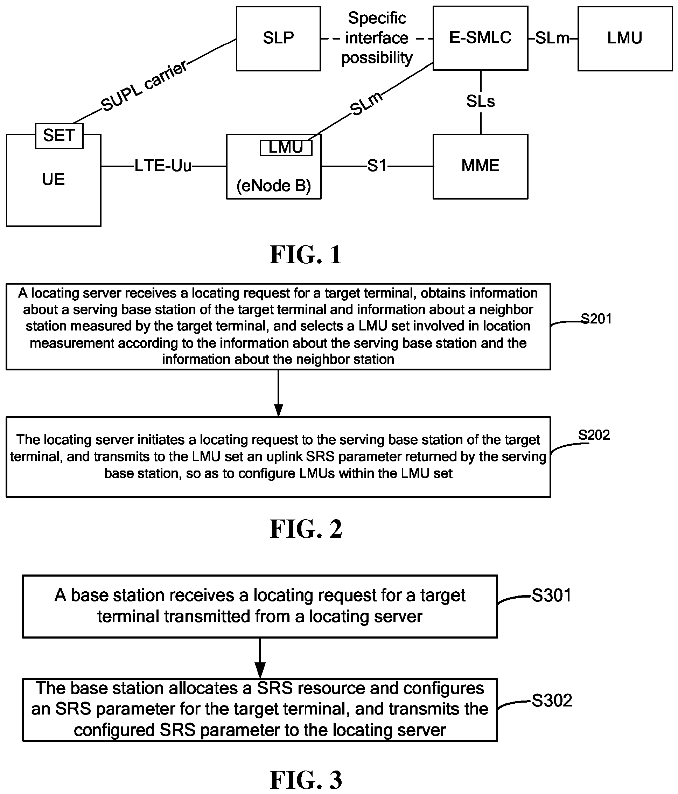

Based on the uplink SRS positioning, the 3GPP standard has established a network structure, specifies the location management unit (LMU) module, and enhances the uplink positioning. The network structure is shown in FIG. 1. However, currently, no open interface standards between a base station and a LMU is established for the LUM, and access to a third-party LMU device is not supported. Further relevant technologies are also known from WO 2011/016804 A1, which relates to a system and method for hybrid location in an LTE network and CN 103 024 757 A, which relates to a method and device for LMU selection.

### SUMMARY

A summary of the subject matter is described hereinafter in detail. This summary is not intended to limit the scope of the claims. The feature of the method and apparatus according to the present invention are defined in the independent claims. Further improvements are provided in the dependent claims.

Embodiments of the present disclosure provide a location management unit (LMU) device fusion method, apparatus and system.

### BRIEF DESCRIPTION OF DRAWINGS

FIG. 1 is a schematic diagram of a LTE system architecture supporting uplink locating in the 3 GPP;
FIG. 2 is a flowchart of a LMU device fusion method according to a first embodiment of the present disclosure;
FIG. 3 is a flowchart of a LMU device fusion method according to a second embodiment of the present disclosure;
FIG. 4 is a schematic diagram of a networking environment where the LMU device fusion method is applied according to a third embodiment of the present disclosure;
FIG. 5 is a flowchart of the LMU device fusion method described in the third embodiment of the present disclosure;
FIG. 6 is an interface open diagram of a terminal moving to the vicinity of a base station 1 according to a fourth embodiment of the present disclosure;
FIG. 7 is an interface open diagram of a terminal moving to an area between the base station 1 and a base station 2 according to a fifth embodiment of the present disclosure;
FIG. 8 is an interface open diagram of a terminal moving to the vicinity of the base station 2 according to a sixth embodiment of the present disclosure;
FIG. 9 is a block diagram of a locating server according to a seventh embodiment of the present disclosure; and
FIG. 10 is a block diagram of a base station according to an eighth embodiment of the present disclosure

Figures 1-3 and 6-10 and their description are not in accordance with all aspects of the invention as defined in the independent claims. They are therefore present for illustration purposes or to highlight specific aspects or features of the claims.

### DETAILED DESCRIPTION

Exemplary embodiments of the present disclosure will be described in detail with reference to the drawings. The drawings show exemplary embodiments of the present disclosure, but it should be understood that exemplary embodiments of the present disclosure may be implemented in many forms and should not be construed as limited to the embodiments set forth herein. Rather, these embodiments are provided so that this disclosure is thorough and complete, and conveys the scope of the disclosure to those skilled in the art.

A location management unit (LMU) device fusion method is provided in a first embodiment of the present disclosure. The method described in this embodiment is applied to a locating server side. In this embodiment, the locating server is responsible for managing all LMUs in networking. The LMU has a location measurement function, but does not have a sounding reference signal (SRS) information configuration function. Each LMU has its own identifier (ID), such as ID₁, ID ₂, ..., and IDₙ. After accessing the locating server, the LMU transmits its ID number to the locating server, and the locating server determines a location of each LMU according to the ID of the LMU. As shown in FIG. 2, the method described in this embodiment includes steps described below.

In step S201, a locating server receives a locating request for a target terminal, obtains information about a serving base station of the target terminal and information about a neighbor station measured by the target terminal, and selects a LMU set involved in location measurement according to the information about the serving base station and the information about the neighbor station.

In this embodiment, the locating request received by the locating server may be initiated by the target terminal, or may be initiated by a mobile management entity (MME) (such as an emergency call), or may be initiated by a third-party entity.

When the locating request is initiated by the target terminal, the target terminal may directly carry the information about the serving base station and the information about the neighbor station of the target terminal in the locating request. The locating server obtains information about the serving base station and the neighbor station of the target terminal by parsing the locating request. When the locating request is initiated by the MME or the third-party entity, the locating server may request the target terminal to report the information about the serving base station and the information about the neighbor station, and receive the information about the serving base station and the information about the neighbor station returned by the target terminal.

In an example of this embodiment, the locating server may estimate a location range of the target terminal according to obtained information about the serving base station and information about the neighbor station. Since the locating server manages all LMUs in the networking, after obtaining the location range of the target terminal, the locating server, may select a LMU within the location range and/or nearby the location range (the selection criterion may be flexibly set) according to the location range as the LMU set involved in the location measurement.

In another embodiment of the present disclosure, the information about the serving base station includes: an ID of the serving base station, a cell global identifier of a serving cell, and measured signal strength of the serving base station; and the information about the neighbor station includes: an ID of the neighbor station and measured signal strength of the neighbor station.

The locating server determines a location of the serving base station according to the ID of the serving base station, determines a location of a serving cell according to the cell global identifier, determines whether the target terminal is located in a center area or in an edge area of the cell according to the signal strength of the serving base station, determines a location of the neighbor station according to the ID of the neighbor station, and determines a distance of the target terminal from the neighbor station according to the signal strength of the neighbor station. After obtaining information described above, the locating server may lock the location range according to known information, or may exclude locations according to the known information and use a location range obtained after excluding the locations as the locked location range.

Those skilled in the art may flexibly set a location range locking policy according to demands. The locating server obtains the location range of the target terminal by executing the policy. The embodiments of the present disclosure do not construe the location range locking policy. Any solution where the location range of the target terminal may be locked through the information about the serving base station and the information about the neighbor station are within the scope of the present application. In addition, in order to adapt to the set location range locking policy, those skilled in the art may expand or reduce information types of the information about the serving base station and the information about the neighbor station described herein.

In step S202, the locating server initiates the locating request to the serving base station of the target terminal, and transmits to an uplink SRS parameter returned by the serving base station the LMU set, so as to configure LMUs within the LMU set.

In this embodiment, the SRS parameter returned by the serving base station includes, but is not limited to, a message type, an ID of the serving base station, an ID of the target terminal, SRS time-frequency resource information, and a SRS period. The message type is a type for transmitting a SRS configuration message.

In an example of this embodiment, after receiving the SRS parameter transmitted from the locating service, the LMU generates a local SRS signal, measures a SRS signal transmitted from the target terminal, obtains a measurement result of a SRS time of arrival (TOA) through a set signal detection algorithm (such as a correlation method and a cutting-edge proportional algorithm), and reports the measurement result to the locating server. The locating server solves a location of the target terminal according to the measurement result returned by the LMU set and feeds back the solution result to the target terminal.

In an example of this embodiment, when receiving a notification of canceling the SRS parameter transmitted from the serving base station, the locating server transmits the notification of canceling the SRS parameter to the LMU set involved in locating. The notification of canceling the SRS parameter includes, but is not limited to, a message type, the ID of the serving base station, the ID of the target terminal, SRS time-frequency resource information, and a SRS period. The message type is a type for canceling SRS configuration information.

In conclusion, the method described in the present disclosure converts the original mode of the base station managing its private LMUs into a mode of the locating server unified management. The locating server may select a set of all LMUs required to be involved in locating only by obtaining access information of the target terminal. The selected LMU set is selected according to the location range of the target terminal. The LMUs in the set may be private LMUs of the serving base station of the target terminal, or may be third-party LMUs belonging to other base stations with respect to the serving base station. The locating server performs SRS configuration on the selected LMU set, which implements the open of the LMU locating interface, thereby implementing the access of the device originally belonging to the third-party LMU into the locating system, and implementing the fusion of the third-party LMU device.

A LMU device fusion method is provided in a second embodiment of the present disclosure. The method described in this embodiment is applied to a base station. The base station periodically initiates clock synchronization to a designated LMU in networking according to configuration information. The designated LMU is usually a LMU adj acent to the base station. The designated LMU is not limited to a private LMU of the base station. The base station may initiate the clock synchronization to any LMU configured by a system as long as it meets the requirement of being in the vicinity of the base station. That is, in this embodiment, the base station needs to initiate the clock synchronization according to configuration without distinguishing between the private LMU and the third-party LMU.

In an example of this embodiment, when the base station is the serving base station of the target terminal described in the first embodiment, as shown in FIG. 3, the method described in this embodiment includes steps described below.

In step S301, the base station receives a locating request for a target terminal transmitted from a locating server.

In step S302, the base station allocates a SRS resource and configures a SRS parameter for the target terminal, and transmits the configured SRS parameter to the locating server.

In an example of this embodiment, when detecting that the target terminal is switched out from the base station (such as switching out from a service area of the serving base station, the target terminal turning off, or other situations), the base station transmits a notification of canceling the SRS parameter to the locating server.

In conclusion, in the method described in this embodiment, the base station no longer distinguishes between the private LMU and the third-party LMU. The base station only needs to initiate time synchronization to a LMU in its vicinity according to configuration, and feeds back a SRS configuration parameter when receiving the locating request. Management rights of the LMUs in networking are assigned to the locating server, and the LMU is selected by the locating server and the SRS parameter is configured, thereby implementing the open of the LMU locating interface. Therefore, the device originally belonging to the third-party LMU may access the locating system, thereby implementing the fusion of the base station and the third-party LMU device.

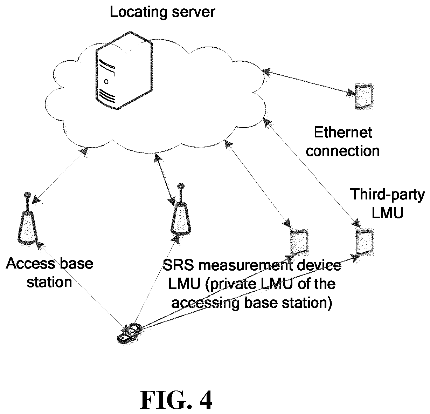

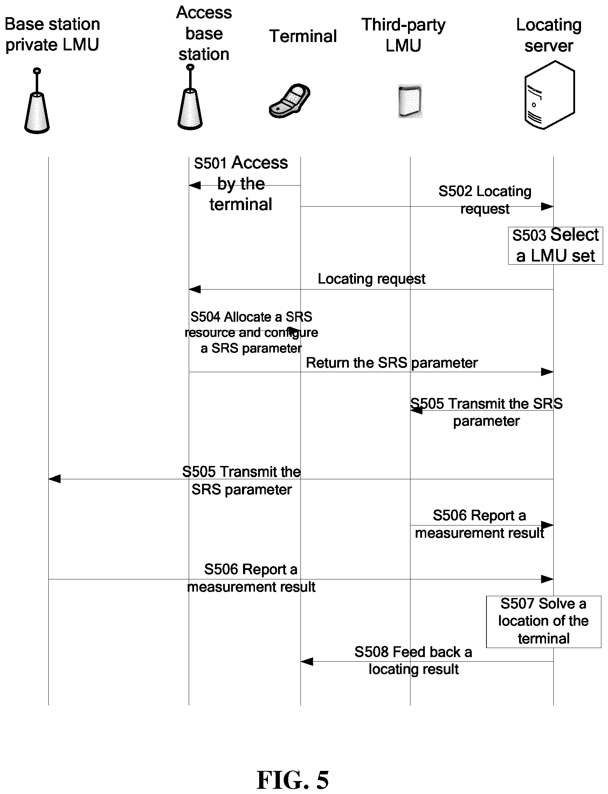

A LMU device fusion method is provided in a third embodiment of the present disclosure. The method is applied to a networking environment shown in FIG. 4. Abase station in the networking environment periodically initiates clock synchronization to a LMU in its vicinity. The LMU in the vicinity of the base station in this embodiment includes a private LMU of the base station and a third-party LMU. As shown in FIG. 5, the method described in this embodiment includes steps described below.

In step S502, a terminal accesses the base station.

In step S502, the terminal transmits a locating request to a locating server. The locating request carries information of the accessed base station and information of a measured neighbor station. In step S503, the locating server selects a LMU set involved in locating according to the information carried in the locating request, and transmits the locating request to the base station accessed by the terminal.

In this embodiment, it is assumed that the selected LMU set includes the private LMU of the base station accessed by the terminal, and the third-party LMU.

In step S504, the base station allocates a SRS resource and configures a SRS parameter for the terminal, and the base station feeds back the configured SRS parameter to the locating server. The configured SRS parameter mainly includes: SRS time-frequency resource information and SRS period information. In this embodiment:
if the terminal is required to transmit a periodical SRS signal, the SRS parameter configured for the terminal includes: a SRS bandwidth, a SRS configuration index number I_{SRS}, a SRS subframe number set, a SRS period T_{SRS}, a subframe offset T_{offset} in the period, a duration, a comb k_{TC}, and the number of antenna ports Nₚ; or
if the terminal is required to transmit an aperiodical SRS signal, the SRS parameter configured for the terminal includes: a SRS bandwidth, a SRS configuration index number I_{SRS}, a SRS subframe number set, a reporting period T_{SRS,1}, a subframe offset T_{offset,1} in the period, a comb k_{TC}, and the number of antenna ports Nₚ.

In step S505, after receiving the SRS parameter of the base station, an evolved serving mobile location center (E-SMLC) of the locating server transmits the SRS parameter to a LMU in the LMU set.

In step S506, the LMU in the LMU set generates a local SRS signal according to received SRS parameter, measures the SRS signal transmitted from the terminal, obtains a measurement result of a SRS TOA through a set signal detection algorithm, and reports the measurement result to the locating server.

In step S507, the locating server solves a location of the terminal according to the measurement result returned by the LMU set and feeds back the solution result to the terminal.

In step S508, when detecting that the terminal is switched out, the base station transmits a notification of canceling the SRS parameter to the locating server.

To make clearer the description of embodiments of the present disclosure, the embodiments of the present disclosure will be described through following embodiments.

A LMU device fusion method is provided in a fourth embodiment of the present disclosure. An application scenario of the method described in this embodiment is that a to-be-located terminal is in the vicinity of an eNodeB 1.

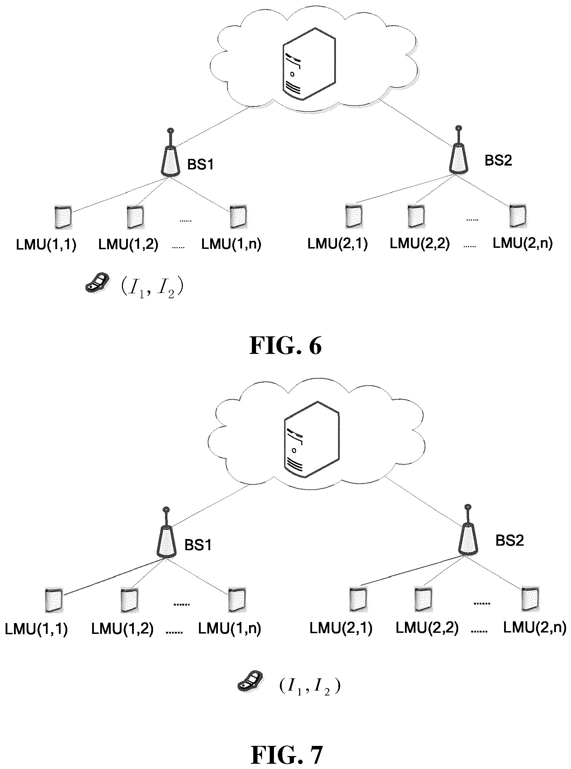

As shown in FIG. 6, the terminal moves to the vicinity of the eNodeB 1 (a base station (BS) 1). During the network construction, measurement devices configured in the vicinity of the eNodeB 1 have LMU (1, 1), LMU (1, 2), ..., and LMU (1, n), and measurement devices configured in the vicinity of an eNodeB 2 (a BS 2) have LMU (2, 1), LMU (2, 2), ..., and LMU (2, n). The implementation of a LMU locating interface open and the device fusion method is described as follows.
1. The base stations and the LMU devices are connected to the E-SMLC of the locating server through an IP network.
2. The base stations periodically initiate clock synchronization to LMUs in the vicinity of the base stations.
3. The terminal accesses the eNodeB 1, and transmits a locating request to the E-SMLC when the terminal has a locating demand. The locating request carries information I₁ of the serving base station eNodeB 1 of the terminal and information I₂ of the neighbor station eNodeB 2 of the serving base station measured by the terminal.
   The information of the serving base station includes: an ID of the serving base station, and an evolved universal terrestrial radio access network (E-UTRAN) cell global identifier (ECGI) of a serving cell. The information of the neighbor station includes: an ID of the neighbor station and measured signal strength of the neighbor station.
4. The locating server determines a location of the serving base station eNodeB 1, a location of the serving cell, a location of the neighbor station eNodeB 2, the signal strength of the serving base station and the signal strength of the neighbor station according to the information about the serving base station and the information about the neighbor station parsed from the locating request. The locating server compares the signal strength of the neighbor station with a set threshold (because this mainly determines the proximity of the terminal to the neighbor station, and this threshold may be flexibly set). When it is determined that the signal strength of the neighbor station is less than the set threshold, the terminal is considered to be far from the eNodeB 2 and is mainly in the coverage range of the eNodeB 1. Therefore, the LMUs in the vicinity of the eNodeB 1 are used as the LMU set involved in location measurement.
5. The locating server transmits the locating request of the terminal to the eNodeB 1, and the eNodeB 1 allocates the SRS resource for the accessed terminal, configures the SRS parameter, and transmits the configured SRS parameter to the locating server.
6. The locating server transmits the received SRS parameter to the LMU set.
7. The LMUs in the LMU set reports a measurement result to the locating server.
8. The locating server solves a location of the terminal according to the measurement result returned by the LMU set.
9. The locating server feeds back the measurement result to the terminal.

A LMU device fusion method is provided in a fifth embodiment of the present disclosure. An application scenario of the method described in this embodiment is that the to-be-located terminal is on the edges of the eNodeB 1 and the eNodeB 2.

As shown in FIG. 7, the terminal moves to the edges of the eNodeB 1 and the eNodeB 2. During the network construction, measurement devices in the vicinity of the base station eNodeB 1 have LMU (1, 1), LMU (1, 2), ..., and LMU (1, n), and measurement devices in the vicinity of the base station eNodeB 2 have LMU (2, 1), LMU (2, 2), ..., and LMU (2, n). The implementation of a LMU locating interface open and the device fusion method is described as follows.
1. The base stations and the LMU devices are connected to the E-SMLC of the locating server through an IP network.
2. The base stations periodically initiate clock synchronization to LMUs in the vicinity of the base stations.
3. The terminal accesses the eNodeB 1, and transmits a locating request to the E-SMLC when the terminal has a locating demand. The locating request carries information I₁ of the serving base station eNodeB 1 of the terminal and information I₂ of the neighbor station eNodeB 2 of the serving base station measured by the terminal.
   The information I₁ of the serving base station includes: an ID of the serving base station, and an ECGI of a serving cell. The information I₂ of the neighbor station includes: an ID of the neighbor station and measured signal strength of the neighbor station.
4. The locating server determines a location of the serving base station eNodeB 1, a location of the serving cell, a location of the neighbor station eNodeB 2, the signal strength of the serving base station and the signal strength of the neighbor station according to the information about the serving base station and the information about the neighbor station parsed from the locating request. The locating server compares the signal strength of the neighbor station with a set threshold. When it is determined that the signal strength of the neighbor station is greater than the set threshold, the terminal is considered to be closer to the eNodeB 2 and is mainly on the edges of the eNodeB 1 and the eNodeB 2, thereby determining that the location range of the terminal is a boundary area of the eNodeB 1 and the eNodeB 2. Therefore, the LMUs in the vicinity of the boundary area of the eNodeB 1 and the eNodeB 2 are used as the LMU set involved in location measurement.
5. The locating server transmits the locating request of the terminal to the eNodeB 1, and the eNodeB 1 allocates the SRS resource for the accessed terminal, configures the SRS parameter, and transmits the configured SRS parameter to the locating server.
6. The locating server transmits the received SRS parameter to the LMU set.
7. The LMUs in the LMU set reports a measurement result to the locating server.
8. The locating server solves a location of the terminal according to the measurement result returned by the LMU set.
9. The locating server feeds back the measurement result to the terminal.

A LMU device fusion method is provided in a sixth embodiment of the present disclosure. An application scenario of the method described in this embodiment is that a to-be-located terminal is in the vicinity of an eNodeB 2.

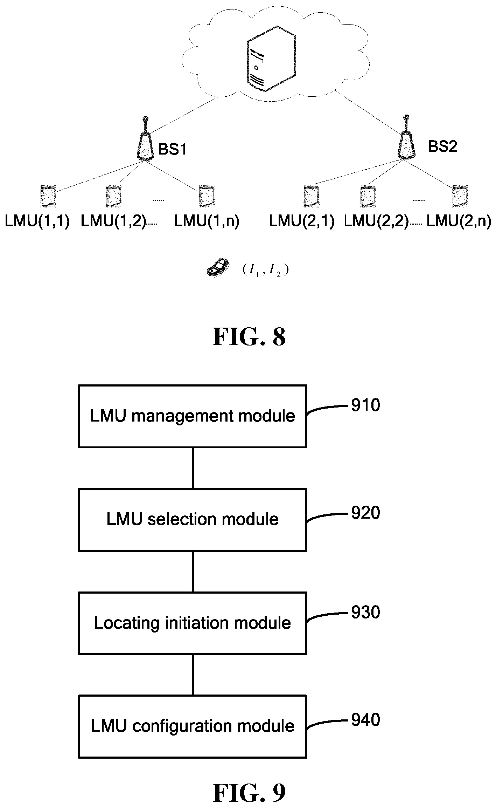

As shown in FIG. 8, the terminal moves to the vicinity of the eNodeB 2. During the network construction, measurements device configured in the vicinity of the base station eNodeB 1 have LMU (2, 1), LMU (1, 2), ..., and LMU (2, n), and measurement devices in the vicinity of the base station eNodeB 2 have LMU (2, 1), LMU (2, 2), ..., and LMU (2, n). The implementation of a LMU locating interface open and the device fusion method is described as follows.
1. The base stations and the LMU devices are connected to the E-SMLC of the locating server through an IP network.
2. The base stations periodically initiate clock synchronization to LMUs in the vicinity of the base stations.
3. The terminal accesses the eNodeB 2, and transmits a locating request to the E-SMLC when the terminal has a locating demand. The locating request carries information I₂ of the serving base station eNodeB 2 of the terminal and information I₁ of the neighbor station eNodeB 1 of the serving base station measured by the terminal.
   The information I₂ of the serving base station includes: an ID of the serving base station, and an ECGI of a serving cell. The information 11 of the neighbor station includes: an ID of the neighbor station and measured signal strength of the neighbor station.
4. The locating server determines a location of the serving base station eNodeB 2, a location of the serving cell, a location of the neighbor station eNodeB 1, the signal strength of the serving base station and the signal strength of the neighbor station according to the information about the serving base station and the information about the neighbor station parsed from the locating request. The locating server compares the signal strength of the neighbor station with a set threshold. When it is determined that the signal strength of the neighbor station is less than the set threshold, the terminal is considered to be far from the eNodeB 1 and is mainly in the coverage range of the eNodeB 2. Therefore, the LMUs in the vicinity of the eNodeB 2 are used as the LMU set involved in location measurement.
5. The locating server transmits the locating request of the terminal to the eNodeB 2, and the eNodeB 2 allocates the SRS resource for the accessed terminal, configures the SRS parameter, and transmits the configured SRS parameter to the locating server.
6. The locating server transmits the received SRS parameter to the LMU set.
7. The LMUs in the LMU set reports a measurement result to the locating server.
8. The locating server solves a location of the terminal according to the measurement result returned by the LMU set.
9. The locating server feeds back the measurement result to the terminal.

A locating server is provided in a seventh embodiment of the present disclosure. As shown in FIG. 9, the locating server includes a LMU management module 910, a LMU selection module 920, a locating initiation module 930 and a LMU configuration module 940.

The LMU management module 910 is configured to manage LMUs in networking.

The LMU selection module 920 is configured to receive a locating request for a target terminal, obtain information about the serving base station of the target terminal and information about the neighbor station measured by the target terminal, and select a LMU set involved in location measurement according to the information about the serving base station and the information about the neighbor station.

The locating initiation module 930 is configured to initiate a locating request to a serving base station of the target terminal.

The LMU configuration module 940 is configured to receive a response message of the locating request from the serving base station, and transmit a SRS parameter to a LMU set after parsing the SRS parameter from the response message, so as to configure LMUs within the LMU set.

In this embodiment, the information about the serving base station includes, but is not limited to: an ID of the serving base station, a cell global identifier of a serving cell, and measured signal strength of the serving base station; and the information about the neighbor station includes, but is not limited to: an ID of the neighbor station and measured signal strength of the neighbor station. In an example of this embodiment, the LMU selection module 920 is configured to estimate a location range of the target terminal according to the information about the serving base station and the information about the neighbor station, and select the LMU set involved in the location measurement according to the estimated location range.

In an example of this embodiment, the locating request received by the LMU selection module 920 may be initiated by the target terminal, or may be initiated by an MME (such as an emergency call), or may be initiated by a third-party entity. When the locating request is initiated by the target terminal, after receiving the locating request for the target terminal, the LMU selection module 920 parses the information about the serving base station and the information about the neighbor station of the target terminal from the locating request; or when the locating request is initiated by the MME (such as an emergency call) or is initiated by the third-party entity, after receiving the locating request for the target terminal transmitted from the MME or transmitted from the third-party entity, the LMU selection module 920 requests the target terminal to report the information about the serving base station and the information about the neighbor station, and receives the information about the serving base station and the information about the neighbor station returned by the target terminal.

In an example of this embodiment, the LMU configuration module 940 is further configured to, when receiving a notification of canceling the SRS parameter transmitted from the serving base station, transmit the notification of canceling the SRS parameter to the LMU set involved in locating.

In conclusion, the locating server described in the present disclosure manages the LMUs in networking. The locating server may select a set of all LMUs required to be involved in locating only by obtaining access information of the target terminal. The selected LMU set is selected according to the location range of the target terminal. The LMUs in the set may be private LMUs of the serving base station of the target terminal, or may be third-party LMUs belonging to other base stations with respect to the serving base station. The locating server performs SRS configuration on the selected LMU set, which implements the open of the LMU locating interface, thereby implementing the access of the device originally belonging to the third-party LMU into the locating system, and implementing the fusion of the third-party LMU device.

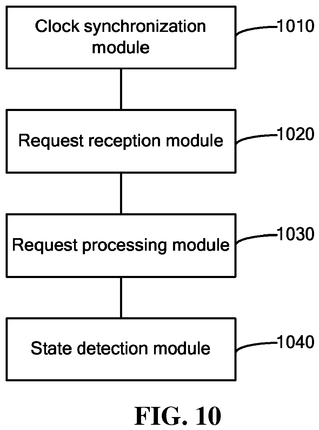

A base station is provided in an eighth embodiment of the present disclosure. As shown in FIG. 10, the base station includes a clock synchronization module 1010, a request reception module 1020 and a request processing module 1030.

The clock synchronization module 1010 is configured to periodically initiate clock synchronization to LMUs within a range at a set distance from the base station.

The request reception module 1020 is configured to receive a locating request for a target terminal transmitted from a locating server.

The request processing module 1030 is configured to allocate a SRS resource and configure a SRS parameter for the target terminal, and transmit the configured SRS parameter to the locating server.

In an example of this embodiment, the base station further includes a state detection module 1040, which is configured to, when detecting that the target terminal is switched out from the base station, transmit a notification of canceling the SRS parameter to the locating server.

In conclusion, in the method described in this embodiment, the base station no longer distinguishes between the private LMU and the third-party LMU. The base station only needs to initiate time synchronization to a LMU in its vicinity according to configuration, and feeds back a SRS configuration parameter when receiving the locating request. Management rights of the LMUs in networking are assigned to the locating server, and the LMU is selected by the locating server and the SRS parameter is configured, thereby implementing the open of the LMU locating interface. Therefore, the device originally belonging to the third-party LMU may access the locating system, thereby implementing the fusion of the base station and the third-party LMU device.

A locating server is provided in a ninth embodiment of the present disclosure. The locating server includes a receiver, a transmitter, a memory and a processor which are connected through a bus. The locating server further includes interfaces for establishing communication connections with LUMs in networking. In this embodiment, the memory stores computer-executable instructions which, when executed by the processor, implement a following method: managing LMUs in networking;
receiving a locating request for a target terminal, obtaining information about the serving base station of the target terminal and information about the neighbor station measured by the target terminal, and selecting a LMU set involved in location measurement according to the information about the serving base station and the information about the neighbor station; and
initiating a locating request to a serving base station of the target terminal, and transmitting an uplink sounding reference signal (SRS) parameter returned by the serving base station to the LMU set, so as to configure LMUs within the LMU set.

In an example of this embodiment, the processor estimates a location range of the target terminal according to the information about the serving base station and the information about the neighbor station, and selects the LMU set involved in the location measurement according to the estimated location range.

In an example of this embodiment, after receiving the locating request for the target terminal, the processor parses the information about the serving base station and the information about the neighbor station of the target terminal from the locating request; or after receiving the locating request for the target terminal transmitted from an MME or transmitted from a third-party entity, the processor initiates a request for reporting the information about the serving base station and the information about the neighbor station to the target terminal, and receives the information about the serving base station and the information about the neighbor station returned by the target terminal.

In an example of this embodiment, when receiving a notification of canceling the SRS parameter transmitted from the base station, the processor transmits the notification of canceling the SRS parameter to the LMU set involved in locating.

The processor may correspond to the LMU management module 910, a configuration function of the LMU configuration module 940 and a selection function of the LMU selection module 920 described in the seventh embodiment. The receiver may correspond to a reception function of the LMU selection module 920 and a reception function of the LMU configuration module 940 described in the seventh embodiment. The transmitter may correspond to the locating initiation module 930 and a transmitting function of the LMU configuration module 940 described in the seventh embodiment.

A base station is provided in a tenth embodiment of the present disclosure. The base station includes interfaces for establishing communication connections with LMUs, a receiver, a transmitter, a memory and a processor, where last four are connected through a bus. The memory stores computer-executable instructions which, when executed by the processor, implement a following method:
periodically initiating clock synchronization to LMUs within a range at a set distance from the base station;
receiving a locating request for a target terminal transmitted from a locating server; and allocating a SRS resource and configuring a SRS parameter for the target terminal, and transmitting the configured SRS parameter to the locating server.

In an example of this embodiment, when detecting that the target terminal is switched out from the base station, the processor transmits a notification of canceling a SRS parameter to the locating server.

The processor may correspond to allocation and configuration functions of the request processing module 1030 and a detection function of the state detection module 1040 described in the eighth embodiment. The receiver may correspond to the request reception module 1020 described in the eighth embodiment. The transmitter may correspond to the clock synchronization module 1010, a transmitting function of the request processing module 1030 and a transmitting function of the state detection module 1040 described in the eighth embodiment.

In conclusion, the base station described in this embodiment no longer distinguishes between the private LMU and the third-party LMU. The base station only needs to initiate time synchronization to a LMU in its vicinity according to configuration, and feeds back a SRS configuration parameter when receiving the locating request. Management rights of the LMUs in networking are assigned to the locating server, and the LMU is selected by the locating server and the SRS parameter is configured, thereby implementing the open of the LMU locating interface. Therefore, the device originally belonging to the third-party LMU may access the locating system, thereby implementing the fusion of the base station and the third-party LMU device.

A LMU device fusion system is provided in an eleventh embodiment of the present disclosure. The system includes a locating server, one or more base stations, and one or more LMUs. The locating server is responsible for managing the one or more LMUs. The base station periodically initiates clock synchronization to LMUs within a range at a set distance from the base station. The locating server is configured to receive a locating request for a target terminal, obtain information about the serving base station of the target terminal and information about the neighbor station measured by the target terminal, select a LMU set involved in location measurement according to the information about the serving base station and the information about the neighbor station, initiate a locating request to a serving base station of the target terminal, and transmit to the LMU set an uplink SRS parameter returned by the serving base station, so as to configure LMUs within the LMU set.

The serving base station of the target terminal is configured to receive the locating request for the target terminal transmitted from the locating server, allocate a SRS resource and configure the SRS parameter for the target terminal, and transmit the configured SRS parameter to the locating server.

For the function and structure of the locating server described in this embodiment, reference may be made in the seventh embodiment or the ninth embodiment. For the function and structure of the serving base station described in this embodiment, reference may be made in the eighth embodiment or the tenth embodiment. The function and structure of the locating server and the base station have been described in detail respectively in the seventh or ninth embodiment and the eight or tenth embodiment, and details will not be described herein again.

The embodiments of the present disclosure further provide a computer-readable storage medium. The computer-readable storage medium stores computer-executable instructions for executing the LMU device fusion method described in the first embodiment when executed by a processor. The embodiments of the present disclosure further provide a computer-readable storage medium. The computer-readable storage medium stores computer-executable instructions for executing the LMU device fusion method described in the second embodiment when executed by a processor. It should be noted that as used herein, the term "comprising", "including" or any other variant thereof is intended to encompass a non-exclusive inclusion so that a process, method, article or apparatus that includes a series of elements not only includes the expressly listed elements but also includes other elements that are not expressly listed or are inherent to such a process, method, article or apparatus. In the absence of more restrictions, the elements defined by the statement "including a ..." do not exclude the presence of additional identical elements in the process, method, article or apparatus that includes the elements.

The serial numbers of the embodiments described above of the present disclosure are merely for ease of description and do not indicate superiority and inferiority of the embodiments.

From the description of the implementation modes described above, it will be apparent to those skilled in the art that the method in the embodiments described above may be implemented by software plus a necessary general-purpose hardware platform, or may of course be implemented by hardware. However, in many cases, the former is a preferred implementation mode. Based on this understanding, the present application may be embodied in the form of a software product. The computer software product is stored in a storage medium (such as a read only memory (ROM)/random access memory (RAM), a magnetic disk or an optical disk) and includes several instructions for enabling a terminal device (which may be a mobile phone, a computer, a server, an air-conditioner, a network device or the like) to execute the method according to each embodiment of the present disclosure.

## Claims

1. A location measurement unit, LMU, device fusion method, applied to a locating server used for managing LMUs in networking, wherein the method comprises:
receiving a locating request for a target terminal, obtaining information about a serving base station of the target terminal and information about a neighbor station measured by the target terminal, and selecting a LMU set involved in location measurement according to the information about the serving base station and the information about the neighbor station (S201), wherein the LMU set comprises private LMUs of the serving base station of the target terminal and third-party LMUs belonging to other base stations with respect to the serving base station; and
initiating the locating request to the serving base station of the target terminal, and transmitting an uplink sounding reference signal, SRS, parameter returned by the serving base station to the LMU set, so as to configure LMUs within the LMU set (S202).

2. The method of claim 1, wherein the information about the serving base station comprises: an identifier, ID, of the serving base station, a cell global identifier of a serving cell, and measured signal strength of the serving base station; and
the information about the neighbor station comprises: an ID of the neighbor station and measured signal strength of the neighbor station.

3. The method of any one of claim 1 or 2, wherein the selecting a LMU set involved in location measurement according to the information about the serving base station and the information about the neighbor station comprises:
estimating a location range of the target terminal according to the information about the serving base station and the information about the neighbor station, and selecting the LMU set involved in the location measurement according to the location range estimated.

4. The method of claim 1 or 2, wherein the obtaining information about a serving base station of the target terminal and information about a neighbor station measured by the target terminal comprises one of the following:
after receiving the locating request for the target terminal, parsing the locating request to obtain the information about the serving base station and the information about the neighbor station of the target terminal; and
after receiving the locating request for the target terminal transmitted from a mobile management entity, MME, or a third-party entity, requesting the target terminal to report the information about the serving base station and the information about the neighbor station, and receiving the information about the serving base station and the information about the neighbor station returned by the target terminal.

5. The method of claim 1 or 2, further comprising:
transmitting a notification of canceling the SRS parameter, transmitted from the serving base station, to the LMU set involved in location measurement after receiving the notification of canceling the SRS parameter.

6. A locating server, comprising:
a location management unit, LMU, management module (910), configured to manage LMUs in networking;
a LMU selection module (920), configured to receive a locating request for a target terminal, obtain information about a serving base station of the target terminal and information about a neighbor station measured by the target terminal, and select a LMU set involved in location measurement according to the information about the serving base station and the information about the neighbor station; wherein the LMU set comprises private LMUs of the serving base station of the target terminal and third-party LMUs belonging to other base stations with respect to the serving base station;
a locating initiation module (930), configured to initiate the locating request to the serving base station of the target terminal; and
a LMU configuration module (940), configured to receive a response message of the locating request from the serving base station, parse the response message to obtain a sounding reference signal (SRS) parameter and transmit the SRS parameter to the LMU set, so as to configure LMUs within the LMU set.

7. The locating server of claim 6, wherein the information about the serving base station comprises:
an identifier, ID, of the serving base station, a cell global identifier of a serving cell, and measured signal strength of the serving base station; and
the information about the neighbor station comprises: an ID of the neighbor station and measured signal strength of the neighbor station.

8. The locating server of claim 6 or 7, wherein the LMU selection module (920) is further configured to estimate a location range of the target terminal according to the information about the serving base station and the information about the neighbor station, and select the LMU set involved in the location measurement according to the location range estimated.

9. The locating server of claim 6, wherein the LMU selection module (920) is further configured to, after receiving the locating request for the target terminal, parse the locating request to obtain the information about the serving base station and the information about the neighbor station of the target terminal; or after receiving the locating request for the target terminal transmitted from a mobile management entity, MME, or a third-party entity, request the target terminal to report the information about the serving base station and the information about the neighbor station, and receive the information about the serving base station and the information about the neighbor station returned by the target terminal.

10. The locating server of claim 6, wherein the LMU configuration module (940) is further configured to, when receiving a notification of canceling the SRS parameter transmitted from the serving base station, transmit the notification of canceling the SRS parameter to the LMU set involved in location measurement.

11. A location management unit, LMU, device fusion system, comprising a locating server, one or more base stations, and one or more LMUs; wherein the locating server is used for managing the one or more LMUs; the one or more base stations each periodically initiates clock synchronization to LMUs within a range at a set distance from the base station;
the locating server is configured to receive a locating request for a target terminal, obtain information about a serving base station of the target terminal and information about a neighbor station measured by the target terminal, select a LMU set involved in location measurement according to the information about the serving base station and the information about the neighbor station, initiate a locating request to the serving base station of the target terminal, and transmit to the LMU set an uplink sounding reference signal, SRS, parameter returned by the serving base station, so as to configure LMUs within the LMU set; wherein the LMU set comprises private LMUs of the serving base station of the target terminal and third-party LMUs belonging to other base stations with respect to the serving base station; and
the serving base station of the target terminal is configured to receive the locating request for the target terminal transmitted from the locating server, allocate a SRS resource and configure the SRS parameter for the target terminal, and transmit the configured SRS parameter to the locating server.

## Patentansprüche

1. Verfahren zum Fusionieren einer Standortmesseinheit, LMU, - Vorrichtung, angewandt auf einen Ortungsserver, der zur Verwaltung von LMU in Netzwerken verwendet wird, wobei das Verfahren umfasst:
Empfangen einer Ortungsanfrage für ein Zielendgerät, Erhalten von Informationen über eine bedienende Basisstation des Zielendgeräts und von Informationen über eine Nachbarstation, die von dem Zielendgerät gemessen wird, und Auswählen eines LMU-Satzes, der an der Standortmessung beteiligt ist, gemäß den Informationen über die bedienende Basisstation und den Informationen über die Nachbarstation (S201), wobei der LMU-Satz private LMUs der bedienenden Basisstation des Zielendgeräts und LMUs von Dritten umfasst, die zu anderen Basisstationen in Bezug auf die bedienende Basisstation gehören; und
Initiieren der Ortungsanfrage an die bedienende Basisstation des Zielendgeräts und Übertragen eines von der bedienenden Basisstation zurückgegebenen SRS-Parameters (Uplink Sounding Reference Signal) an den LMU-Satz, um LMUs innerhalb des LMU-Satzes zu konfigurieren (S202).

2. Verfahren nach Anspruch 1, wobei die Informationen über die bedienende Basisstation umfassen: einen Identifikator, ID, der bedienenden Basisstation, einen globalen Zellidentifikator einer bedienenden Zelle und die gemessene Signalstärke der bedienenden Basisstation; und
die Informationen über die Nachbarstation umfassen: eine ID der Nachbarstation und die gemessene Signalstärke der Nachbarstation.

3. Verfahren nach einem der Ansprüche 1 oder 2, wobei das Auswählen eines LMU-Satzes, der an der Standortmessung beteiligt ist, gemäß den Informationen über die bedienende Basisstation und den Informationen über die Nachbarstation umfasst:
Schätzen eines Standortbereichs des Zielendgeräts anhand der Informationen über die bedienende Basisstation und der Informationen über die Nachbarstation, und Auswählen des an der Standortmessung beteiligten LMU-Satzes anhand des geschätzten Standortbereichs.

4. Verfahren nach Anspruch 1 oder 2, wobei das Erhalten von Informationen über eine bedienende Basisstation des Zielendgeräts und von Informationen über eine von dem Zielendgerät gemessene Nachbarstation eines der folgenden umfasst:
nach dem Empfangen der Ortungsanfrage für das Zielendgerät, Parsen der Ortungsanfrage, um die Informationen über die bedienende Basisstation und die Informationen über die Nachbarstation des Zielendgerätes zu erhalten; und
nach dem Empfangen der Ortungsanfrage für das Zielendgerät, die von einer mobilen Verwaltungseinheit, MME, oder einer Dritt-Einheit übertragen wurde, Auffordern des Zielendgeräts, die Informationen über die bedienende Basisstation und die Informationen über die Nachbarstation zu melden, und Empfangen der Informationen über die bedienende Basisstation und der Informationen über die Nachbarstation, die von dem Zielendgerät zurückgegeben wurden.

5. Verfahren nach Anspruch 1 oder 2, ferner umfassend:
Übertragen einer Benachrichtigung über die Löschung des SRS-Parameters, die von der bedienenden Basisstation übertragen wird, an den LMU-Satz, der an der Standortmessung beteiligt ist, nachdem er die Benachrichtigung über die Löschung des SRS-Parameters empfangen hat.

6. Ortungsserver, umfassend:
ein LMU-Verwaltungsmodul (910), das dazu konfiguriert ist, LMUs im Netzwerk zu verwalten;
ein LMU-Auswahlmodul (920), das dazu konfiguriert ist, eine Ortungsanfrage für ein Zielendgerät zu empfangen, Informationen über eine bedienende Basisstation des Zielendgeräts und Informationen über eine von dem Zielendgerät gemessene Nachbarstation zu erhalten und einen an der Standortmessung beteiligten LMU-Satz gemäß den Informationen über die bedienende Basisstation und den Informationen über die Nachbarstation auszuwählen; wobei der LMU-Satz private LMUs der bedienenden Basisstation des Zielendgeräts und LMUs von Dritten umfasst, die zu anderen Basisstationen in Bezug auf die bedienende Basisstation gehören;
ein Ortungsinitiierungsmodul (930), das dazu konfiguriert ist, die Ortungsanfrage an die bedienende Basisstation des Zielendgeräts zu initiieren; und
ein LMU-Konfigurationsmodul (940), das dazu konfiguriert ist, eine Antwortnachricht der Ortungsanfrage von der bedienenden Basisstation zu empfangen, die Antwortnachricht zu analysieren, um einen SRS-Parameter (Sounding Reference Signal) zu erhalten, und den SRS-Parameter an den LMU-Satz zu übertragen, um so LMUs innerhalb des LMU-Satzes zu konfigurieren.

7. Ortungsserver nach Anspruch 6, wobei die Informationen über die bedienende Basisstation umfassen: einen Identifikator, ID, der bedienenden Basisstation, einen globalen Zellidentifikator einer bedienenden Zelle und die gemessene Signalstärke der bedienenden Basisstation; und
die Informationen über die Nachbarstation umfassen: eine ID der Nachbarstation und die gemessene Signalstärke der Nachbarstation.

8. Ortungsserver nach Anspruch 6 oder 7, wobei das LMU-Auswahlmodul (920) ferner dazu konfiguriert ist, einen Standortbereich des Zielendgeräts anhand der Informationen über die bedienende Basisstation und der Informationen über die Nachbarstation zu schätzen, und Auswählen des an der Standortmessung beteiligten LMU-Satzes anhand des geschätzten Standortbereichs.

9. Ortungsserver nach Anspruch 6, wobei das LMU-Auswahlmodul (920) ferner dazu konfiguriert ist, nach dem Empfangen der Ortungsanfrage für das Zielendgerät die Ortungsanfrage zu analysieren, um die Informationen über die bedienende Basisstation und die Informationen über die Nachbarstation des Zielendgeräts zu erhalten; oder nach dem Empfangen der Ortungsanfrage für das Zielendgerät, die von einer mobilen Verwaltungseinheit, MME, oder einer Dritt-Einheit übertragen wurde, das Zielendgerät aufzufordern, die Informationen über die bedienende Basisstation und die Informationen über die Nachbarstation zu melden, und die Informationen über die bedienende Basisstation und die Informationen über die Nachbarstation zu empfangen, die von dem Zielendgerät zurückgegeben wurden.

10. Ortungsserver nach Anspruch 6, wobei das LMU-Konfigurationsmodul (940) ferner dazu konfiguriert ist, beim Empfangen einer von der bedienenden Basisstation übertragenen Benachrichtigung über die Löschung des SRS-Parameters die Benachrichtigung über die Löschung des SRS-Parameters an den an der Standortmessung beteiligten LMU-Satz zu übertragen.

11. System zum Fusionieren einer Standortverwaltungseinheit, LMU, -Vorrichtung, umfassend einen Ortungsserver, eine oder mehrere Basisstationen und eine oder mehrere LMUs; wobei der Ortungsserver zum Verwalten der einen oder mehreren LMUs verwendet wird; die eine oder mehreren Basisstationen jeweils periodisch eine Taktsynchronisation mit LMUs innerhalb eines Bereichs in einem festgelegten Abstand von der Basisstation einleiten;
der Ortungsserver dazu konfiguriert ist, eine Ortungsanfrage für ein Zielendgerät zu empfangen, Informationen über eine bedienende Basisstation des Zielendgeräts und Informationen über eine Nachbarstation, die von dem Zielendgerät gemessen wird, zu erhalten, einen LMU-Satz auszuwählen, der an der Standortmessung beteiligt ist, gemäß den Informationen über die bedienende Basisstation und den Informationen über die Nachbarstation, eine Ortungsanfrage an die bedienende Basisstation des Zielendgeräts zu initiieren und an den LMU-Satz einen Parameter für ein Aufwärtssondierungsreferenzsignal, SRS, zu übertragen, der von der bedienenden Basisstation zurückgegeben wird, um LMUs innerhalb des LMU-Satzes zu konfigurieren; wobei der LMU-Satz private LMUs der bedienenden Basisstation des Zielendgeräts und LMUs von Dritten umfasst, die zu anderen Basisstationen in Bezug auf die bedienende Basisstation gehören; und
die bedienende Basisstation des Zielendgeräts dazu konfiguriert ist, die von dem Ortungsserver übertragene Ortungsanfrage für das Zielendgerät zu empfangen, eine SRS-Ressource zuzuweisen und den SRS-Parameter für das Zielendgerät zu konfigurieren und den konfigurierten SRS-Parameter an den Ortungsserver zu übertragen.

## Revendications

1. Procédé de fusion de dispositifs d'unité de mesure de localisation, LMU, appliqué à un serveur de localisation utilisé pour gérer des LMU dans un réseau, dans lequel le procédé comprend :
la réception d'une demande de localisation pour un terminal cible, l'obtention d'informations sur une station de base de desserte du terminal cible et d'informations sur une station voisine mesurées par le terminal cible, et la sélection d'un ensemble LMU impliqué dans la mesure de localisation selon les informations sur la station de base de desserte et les informations sur la station voisine (S201), dans lequel l'ensemble LMU comprend des LMU privées de la station de base de desserte du terminal cible et des LMU tierces appartenant à d'autres stations de base par rapport à la station de base de desserte ; et
le déclenchement de la demande de localisation à la station de base de desserte du terminal cible, et la transmission d'un paramètre de signal de référence de sondage de liaison montante, SRS, renvoyé par la station de base de desserte à l'ensemble LMU, de manière à configurer des LMU dans l'ensemble LMU (S202).

2. Procédé selon la revendication 1, dans lequel les informations concernant la station de base de desserte comprennent : un identifiant, ID, de la station de base de desserte, un identifiant global de cellule d'une cellule de desserte, et une intensité de signal mesurée de la station de base de desserte ; et
les informations concernant la station voisine comprennent : un ID de la station voisine et une intensité de signal mesurée de la station voisine.

3. Procédé selon l'une quelconque des revendications 1 ou 2, dans lequel la sélection d'un ensemble LMU impliqué dans la mesure de localisation selon les informations concernant la station de base de desserte et les informations concernant la station voisine comprend :
l'estimation d'une plage de localisation du terminal cible selon les informations concernant la station de base de desserte et les informations concernant la station voisine, et la sélection de l'ensemble LMU impliqué dans la mesure de localisation selon la plage de localisation estimée.

4. Procédé selon la revendication 1 ou 2, dans lequel l'obtention d'informations sur une station de base de desserte du terminal cible et d'informations sur une station voisine mesurées par le terminal cible comprend l'une des étapes suivantes :
après réception de la demande de localisation pour le terminal cible, l'analyse de la demande de localisation pour obtenir les informations concernant la station de base de desserte et les informations concernant la station voisine du terminal cible ; et
après réception de la demande de localisation pour le terminal cible transmise par une entité de gestion mobile, MME, ou une entité tierce, la demande au terminal cible de rapporter les informations concernant la station de base de desserte et les informations concernant la station voisine, et la réception des informations sur la station de base de desserte et les informations sur la station voisine renvoyées par le terminal cible.

5. Procédé selon la revendication 1 ou 2, comprenant en outre : la transmission d'une notification d'annulation du paramètre SRS, transmise depuis la station de base de desserte, à l'ensemble LMU impliqué dans la mesure de localisation après avoir reçu la notification d'annulation du paramètre SRS.

6. Serveur de localisation, comprenant :
un module de gestion d'unité de gestion de localisation, LMU, (910), configuré pour gérer les LMU en réseau ;
un module de sélection de LMU (920), configuré pour recevoir une demande de localisation pour un terminal cible, obtenir des informations sur une station de base de desserte du terminal cible et des informations sur une station voisine mesurées par le terminal cible, et sélectionner un ensemble LMU impliqué dans la mesure de localisation selon les informations sur la station de base de desserte et les informations sur la station voisine ; dans lequel l'ensemble LMU comprend des LMU privées de la station de base de desserte du terminal cible et des LMU tierces appartenant à d'autres stations de base par rapport à la station de base de desserte ;
un module de déclenchement de localisation (930), configuré pour déclencher la demande de localisation à la station de base de desserte du terminal cible ; et
un module de configuration LMU (940), configuré pour recevoir un message de réponse de la demande de localisation de la station de base de desserte, analyser le message de réponse pour obtenir un paramètre de signal de référence de sondage (SRS) et transmettre le paramètre SRS à l'ensemble LMU, de manière à configurer les LMU dans l'ensemble LMU.

7. Serveur de localisation selon la revendication 6, dans lequel les informations concernant la station de base de desserte comprennent : un identifiant, ID, de la station de base de desserte, un identifiant global de cellule d'une cellule de desserte, et une intensité de signal mesurée de la station de base de desserte ; et
les informations concernant la station voisine comprennent : un ID de la station voisine et une intensité de signal mesurée de la station voisine.

8. Serveur de localisation selon la revendication 6 ou 7, dans lequel le module de sélection LMU (920) est en outre configuré pour estimer une plage de localisation du terminal cible selon les informations sur la station de base de desserte et les informations sur la station voisine, et sélectionner l'ensemble LMU impliqué dans la mesure de localisation en fonction de la plage de localisation estimée.

9. Serveur de localisation selon la revendication 6, dans lequel le module de sélection LMU (920) est en outre configuré pour, après réception de la demande de localisation pour le terminal cible, analyser la demande de localisation pour obtenir les informations sur la station de base de desserte et les informations sur la station voisine du terminal cible ; ou après avoir reçu la demande de localisation du terminal cible transmise par une entité de gestion mobile, MME ou une entité tierce, demander au terminal cible de rapporter les informations sur la station de base de desserte et les informations sur la station voisine, et recevoir les informations sur la station de base de desserte et les informations sur la station voisine renvoyées par le terminal cible.

10. Serveur de localisation selon la revendication 6, dans lequel le module de configuration LMU (940) est en outre configuré pour, lors de la réception d'une notification d'annulation du paramètre SRS transmise depuis la station de base de desserte, transmettre la notification d'annulation du paramètre SRS à l'ensemble LMU impliqué dans la mesure de localisation.

11. Système de fusion de dispositifs d'unité de gestion de localisation, LMU, comprenant un serveur de localisation, une ou plusieurs stations de base et une ou plusieurs LMU ; dans lequel le serveur de localisation est utilisé pour gérer les une ou plusieurs LMU ; les une ou plusieurs stations de base déclenchent chacune périodiquement une synchronisation d'horloge vers des LMU dans une plage à une distance définie de la station de base ;
le serveur de localisation est configuré pour recevoir une demande de localisation pour un terminal cible, obtenir des informations sur une station de base de desserte du terminal cible et des informations sur une station voisine mesurée par le terminal cible, sélectionner un ensemble LMU impliqué dans la mesure de localisation selon les informations sur la station de base de desserte et les informations sur la station voisine, déclencher une demande de localisation à la station de base de desserte du terminal cible, et transmettre à l'ensemble LMU un paramètre de signal de référence de sondage de liaison montante, SRS, renvoyé par la station de base de desserte, de manière à configurer les LMU dans l'ensemble LMU ; dans lequel l'ensemble de LMU comprend des LMU privées de la station de base de desserte du terminal cible et des LMU tierces appartenant à d'autres stations de base par rapport à la station de base de desserte ; et
la station de base de desserte du terminal cible est configurée pour recevoir la demande de localisation pour le terminal cible transmise par le serveur de localisation, allouer une ressource SRS et configurer le paramètre SRS pour le terminal cible, et transmettre le paramètre SRS configuré au serveur de localisation.
